# EUROPEAN PATENT SPECIFICATION

(11) **EP 2 071 810 B1**
(45) Date of publication and mention of the grant of the patent: **09.11.2011**
(21) Application number: 07291483.1
(22) Date of filing: 11.12.2007
(51) Int. Cl.: H04L 29/12

(54) **Method to obtain an Internet protocol address**
Verfahren zum Erhalten einer Internetprotokolladresse
Procédé pour obtenir une adresse de protocole Internet

(43) Date of publication of application: 17.06.2009
(73) Proprietor: Alcatel Lucent, 75008 Paris (FR)
(72) Inventor: De Cnodder, Stefaan, 2000 Antwerpen (BE); Mensch, Patrick, 2650 Edegem (BE)
(74) Representative: Narmon, Gisèle Marie Thérèse

(56) References cited:
- WO-A-03/075517
- US-A1- 2004 264 435
- US-A1- 2006 268 863
- US-A1- 2007 192 593

## Description

The invention relates to a method for a client device in a wide area data network (WAN), comprising local area sub networks (LAN), to obtain a WAN-side internet protocol (IP) address and a LAN side IP address.

Service providers, which provide internet access to their customers provide a consumer premises equipment (CPE), which is often called a modem and configure this CPE as a router, which does IP forwarding. This means that the WAN side of the CPE is provided with an IP address and that the other side, the consumer side, has a LAN side IP address. The end devices of the consumer, like personal computers (PC) and set top boxes (STB) are assigned an IP address in the same subnet as the LAN side IP address of the CPE.

In case the CPE is doing network address translation (NAT) the CPE uses dynamic host configuration protocol (DHCP) to obtain a WAN side IP address. The WAN side IP address could also be provided manually or via point to point protocol (PPP). The CPE is further configured as a DHCP server with a fixed range of private IP addresses to be allocated to the devices on the LAN side. This range is preconfigured for all CPE's and can be identical for all customers of the service provider. As the CPE uses NAT these private IP addresses are not visible outside the consumers' local home network. This provides for a natural firewall, but has the disadvantage that individual devices within the consumers' network are not directly accessible from the WAN side. It is possible to have port forwarding in the CPE, which provides some access from the WAN side to the end device of the consumer, but still this does not enable full access to the end devices as if the end devices were directly connected to the WAN.

Some service providers do not use NAT and in such a case the IP subnet of the LAN side becomes visible and routable in the WAN. In such a case it is necessary that all LAN side subnets have a different IP address. Currently each individual CPE is configured manually by the service provider and this data is also entered in the devices present on the WAN, for example in digital subscriber line access multiplexers (DSLAM). As these DSLAM are typically de-centralised and close to the consumer it is difficult to maintain the devices. Especially when changes to the IP address allocation have to be performed, for example when scaling the service providers' network.

US 2006/0015595 Al discloses a method and apparatus for obtaining addresses for multiple interfaces in a device. The method comprises generating a message and transmitting the message to a server over a communication link. The message includes a request for a server to provide a first address to assign to a first interface of a client device and a second address to assign to a second interface of the client device. The method further comprises receiving a response from the server configuring at least one of the first interface and second interface based on the response received from the server. The response includes the first address and the second address. This known method is not adapted to configure a CPE acting as a local DHCP server.

It is therefore an object of the invention to improve the configuration of the CPE.

This object of the invention is achieved by the methods according to independent claims 1 and 5, and the network device according to claim 7.

Instead of only acquiring a WAN side IP address as is common with regular CPE's issuing a DHCP request, according to the method of the invention the IP address providing host, which could be for example a DHCP server, not only issues a WAN side IP address, but also a LAN side IP address for the client device, as well as a WAN-side subnet mask and a LAN-side subnet mask.

This enables an automatic consumer specific configuration of the client device of the consumer. As all data i.e. LAN side IP address and WAN side IP address, are provided by a host, changes in the network configuration can be automatically transmitted to the client devices on a data network through the IP address providing host.

The client device could for example be a residential gateway, but preferred the client device is digital subscriber line (DSL) consumer premises equipment (CPE).

In a preferred embodiment the request for an IP-address conforms to the dynamic host configuration protocol (DHCP). DHCP is widely used in networks to provide automatic configuration. Within this protocol it is provided to add options to the protocol without disturbing devices which are not aware of these added options. So the option of providing a LAN side IP address within the DHCP could easily be implemented without the risk that all the client devices and CPE's stop functioning.

According to the invention, the response further comprises for the client device at least a WAN side subnet mask and a LAN side subnet mask. Based on the subnet mask the client device can determine how many IP addresses are available to the client device on both the WAN side and the LAN side.

According to the invention, the client device comprises a DHCP server for the LAN, further comprising the step of setting the DHCP server with the LAN side IP address comprised in the response. When the client device receives the response from the IP address providing host, it can configure itself with the WAN side IP address and the LAN side IP address. Based on a subnet which could either be static or which is preferably comprised in the response, the range for the DHCP server for a LAN can be configured. This will enable consumer end devices to automatically obtain an IP address, which is routable from the WAN.

The invention further comprises a method for a network device comprised in a data network having a client device and an IP address providing host, wherein a response to an IP address request is issued by the host to the client via the network device, wherein the response comprises for the client device at least a WAN-side IP address, a WAN-side subnet mask, a LAN-side IP address, and a LAN-side subnet mask, the method comprising the steps of:
- snooping the response of the host;
- storing the combination of the WAN-side IP address, the WAN-side subnet mask, the LAN-side IP address, and the LAN-side subnet mask for the client.

With this method according to the invention it is possible for devices present on the WAN to keep track of the IP addresses provided to the client devices. For example, the network device can be a switch or digital subscriber line access multiplexer (DSLAM). Such devices keep a routing table in which the LAN side IP address is linked to the WAN side IP address. By snooping the responses of the IP address providing host, the network devices can easily keep track of the IP addresses provided to the client devices without having to request the data from the IP address providing host itself. This avoids the use of any additional protocols.

Finally, the invention also comprises a network device, such as a switch or a digital subscriber line access multiplayer (DSLAM) for use in a network comprising a client device and an IP address providing host, wherein a response to an IP address request is issued by the host to the client via the network device, wherein the response comprises for the client device at least a WAN-side IP address, an WAN-side subnet mask, a LAN-side IP address, and a LAN-side subnet mask, the network device comprising
- snooping means for snooping the response of the host; and
- a storage for storing the combination of the WAN-side IP address, the WAN-side subnet mask, the LAN-side IP address, and the LAN-side subnet mask for the client.

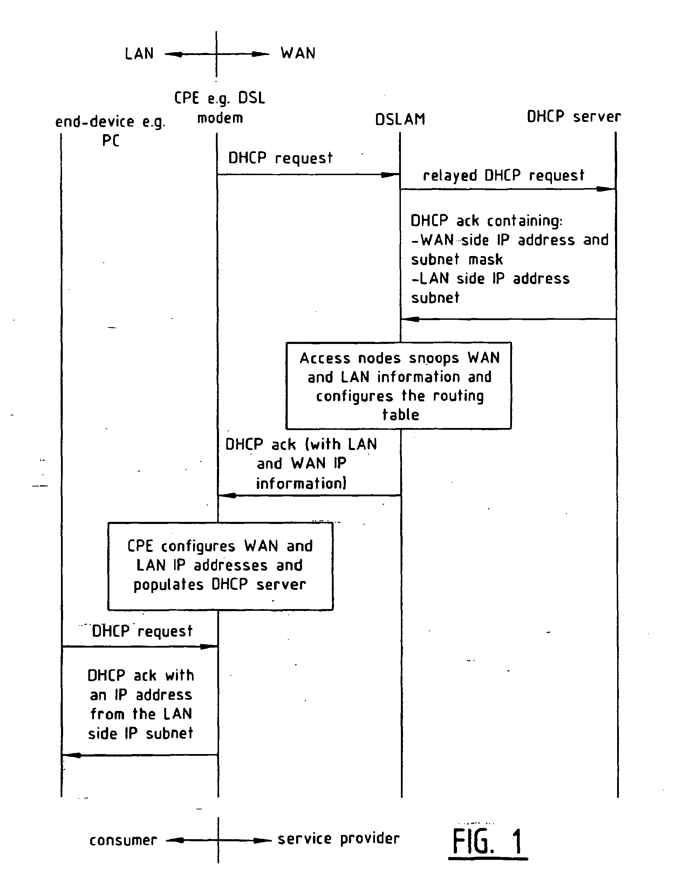

The invention will now be further elucidated in conjunction with the accompanying drawing. The drawing shows a diagram of an embodiment of the method according to the invention.

In the figure a diagram is shown illustrating an embodiment of a method according to the invention. In the example it is shown that the LAN of the consumer is connected through a DSL modem to the WAN of the service provider. With the DSL modem, the consumer can connect through regular phone lines to the WAN of the service provider. In order to make this DSL technology possible, a so called DSLAM is placed in the neighbourhood of the consumer and collects the DSL signals from the different phone lines of the different consumers and multiplexes it into a data-stream which is forwarded to the backbone of the service provider. This DSLAM is in fact a switch which switches incoming data to the correct phone line such that the data arrives at the correct DSL modem and thus the correct consumer.

When the DSL modem is initiated, a DHCP request is sent through the phone line to the DSLAM which relays the DHCP request to a DHCP server present on the backbone of the service provider. The DHCP server acknowledges the request with a response which comprises a WAN side IP address with subnet mask and a LAN side IP address with subnet mask. This response of the DHCP server is sent back to the DSLAM, which routes the response to the correct DSL modem of the correct consumer. -

When the DHCP response of the DHCP server passes the DSLAM, the DSLAM snoops the response and takes from it the WAN side information and the LAN side information. With this information a routing table in the DSLAM is configured such that further requests from the DSL modem are correctly routed to the backbone of the service provider and that responses are correctly routed back towards the DSL modem.

When the DHCP response arrives at the DSL modem, the DSL modem configures itself with the WAN IP address and the LAN IP address. Based on the subnet mask a range is defined, which can comprise one or more IP addresses. For the LAN side, i.e. the consumer side, a DHCP server is configured in the DSL modem with the LAN IP address and the subnet mask defines the range in which the DHCP server on the LAN side can provide IP addresses.

Now an end device, for example a personal computer of the consumer can send a DHCP request to the ' DSL modem. This DHCP request is acknowledged with an IP address such that the end device can configure itself with a correct IP address which is routable from the WAN of the service provider.

A practical example of the above is as follows. Suppose a routed CPE is connected on line 1 of a DSLAM. The DSLAM connects the CPE through a regular phone line to the backbone of the internet. Furthermore, a DHCP server is present on the WAN side.

The CPE issues a DHCP request to the DHCP server in order to get an IP address. The DHCP server replies with the IP address 81.244.20.1/24 for the WAN side of the CPE and with a LAN side subnet 10.1.2.1/29 for the LAN side subnet of the CPE.

When this DHCP message is directed back to the CPE, the DHCP message passes the DSLAM. The DSLAM reads the information in the message and extracts the WAN-side IP address and the LAN-side subnet. With this extracted information the routing table of the DSLAM is configured as follows:
- destination 81.244.20.1/32 next-hop line 1
- destination 10.1.2.1/29 next-hop 81.244.20.1.

In particular the second route identifies how the IP addresses of the LAN-side subnet of the CPE should be routed.

Then the DHCP message originating from the DHCP server is forwarded to the CPE via line 1. This is the end destination of the DHCP message. The CPE reads the DHCP message and extracts the WAN-side IP address, i.e. 81.244.20.1/24 and the LAN-side IP address, i.e. 10.1.2.1/29.

With the LAN-side IP address the CPE can configure a LAN-side DHCP server present in the CPE. This DHCP server can now issue the IP addresses 10.1.2.2 until 10.1.2.8 for devices on the LAN.

After a device, for example a personal computer, has acquired an IP address on the LAN, e.g. 10.1.2.6, the device can communicate with other devices on the internet, in particular hosts. Data packets are sent to the host from the per-sonal computer. The data packet contains the source IP address and the destination IP address. The first step for the data packet is the CPE. The CPE identifies the destination of the data packet and re-directs the data packet through line 1 to the DSLAM. When the data packet arrives at the DSLAM the same is done with the data packet based on the routing table present in the DSLAM. This can continue a number of times until the data packet arrives at the destination host.

Data packets returning from the destination are routed back at the same way to the CPE. When the packet arrives at the CPE, the CPE looks up the routing table and directs the packet back to IP address 10.1.2.6.

## Claims

1. Method for a client device in a wide area data network (WAN), comprising local area subnetworks (LAN), to obtain a WAN-side internet protocol ,IP, address for use at a provider-facing port of the client device and a LAN-side IP address for use at a customer-facing port of the client device, the method comprising the steps of:
- issuing a request to an IP address providing host;
- receiving a response of the IP address providing host, wherein the response comprises at least said WAN-side IP address and said LAN-side IP address, **characterized in that** the response further comprises at least a WAN-side subnet mask and a LAN-side subnet mask, **in that** the client device comprises a local DHCP server for the LAN,
**and in that** the method further comprises assigning a range of IP addresses represented by the LAN-side IP address and the LAN-side subnet mask comprised in the response to said local DHCP server for providing IP addresses from said range to LAN-side devices.

2. Method according to claim 1, wherein the client device is a residential gateway.

3. Method according to claim 1, wherein the client device is digital subscriber line (DSL) consumer premises equipment (CPE).

4. Method according to claim 1, wherein the request conforms to the dynamic host configuration protocol, DHCP.

5. Method for a network device comprised in a data network, said network having a client device and an IP address providing host, wherein the network device relays a response to an IP address request issued by the host to the client device, wherein the response comprises for the client device at least a WAN-side IP address, a WAN-side subnet mask, a LAN-side IP address, and a LAN-side subnet mask, the method **characterised by** the steps of:
- snooping the response of the host;
- storing the combination of the WAN-side IP address, the WAN-side subnet mask, the LAN-side IP address, and the LAN-side subnet mask for the client device.

6. Method according to claim 5, wherein the network device is a switch or a digital subscriber line access multiplexer (DSLAM).

7. Network device, such as a switch or a digital subscriber line access multiplexer(DSLAM) for use in a network, said network comprising a client device and an IP address providing host, wherein the network device relays a response to an IP address request issued by the host to the client device, wherein the response comprises for the client device at least a WAN side IP address, a WAN-side subnet mask, a LAN side IP address, and a LAN-side subnet mask, the network device **characterised by**
- snooping means for snooping the response of the host; and
- a storage for storing the combination of the WAN side IP address, the WAN-side subnet mask, the LAN side IP address, and the LAN-side subnet mask for the client device.

## Patentansprüche

1. Verfahren für eine Client-Vorrichtung in einem Weitverkehrsnetz (WAN), welches lokale Netzwerke (LAN) umfasst, um eine WAN-seitige Internetprotokoll, IP-Adresse für die Verwendung an einem dem Anbieter zugewandten Port der Client-Vorrichtung und eine LAN-seitige IP-Adresse für die Verwendung an einem dem Kunden zugewandten Port der Client-Vorrichtung zu erhalten, wobei das Verfahren die folgenden Schritte umfasst:
- Ausgeben einer Anforderung an einen IP-Adressen bereitstellenden Host;
- Empfangen einer Antwort von dem IP-Adressen bereitstellenden Host, wobei die Antwort mindestens die besagte WAN-seitige IP-Adresse und die besagte LAN-seitige IP-Adresse enthält,
**dadurch gekennzeichnet, dass** die Antwort weiterhin mindestens eine WAN-seitige Teilnetzmaske und eine LAN-seitige Teilnetzmaske enthält,
**dass** die Client-Vorrichtung einen lokalen DHCP-Server für das LAN umfasst,
**und dass** das Verfahren weiterhin das Zuordnen einer Auswahl von IP-Adressen, welche durch die in der Antwort an den besagten lokalen DHCP-Server enthaltene LAN-seitige IP-Adresse und die LAN-seitige Teilnetzmaske dargestellt sind, um IP-Adressen aus der besagten Auswahl an LAN-seitige Vorrichtungen bereitzustellen, umfasst.

2. Verfahren nach Anspruch 1, wobei die Client-Vorrichtung ein stationäres Gateway ist.

3. Verfahren nach Anspruch 1, wobei die Client-Vorrichtung eine digitale Teilnehmeranschluss, DSL-Ausrüstung in Kunden-Räumlichkeiten (CPE) ist.

4. Verfahren nach Anspruch 1, wobei die Anforderung dem dynamischen Host-Konfigurationsprotokoll, DHCP, entspricht.

5. Verfahren für eine in einem Datennetzwerk umfasste Netzwerkvorrichtung, wobei das besagte Netzwerk eine Client-Vorrichtung und einen IP-Adressen bereitstellenden Host umfasst, wobei die Netzwerkvorrichtung eine Antwort auf eine von dem Host an die Client-Vorrichtung ausgegebene IP-Adressanforderung weiterleitet, wobei die Antwort für die Client-Vorrichtung mindestens eine WAN-seitige IP-Adresse, eine WAN-seitige Teilnetzmaske, eine LAN-seitige IP-Adresse und eine LAN-seitige Teilnetzmaske enthält, wobei das Verfahren durch die folgenden Schritte **gekennzeichnet** ist:
- Mitlesen der Antwort des Hosts;
- Speichern der Kombination der WAN-seitigen IP-Adresse, der WAN-seitigen Teilnetzmaske, der LAN-seitigen IP-Adresse und der LAN-seitigen Teilnetzmaske für die Client-Vorrichtung.

6. Verfahren nach Anspruch 5, wobei die Netzwerkvorrichtung ein Switch oder ein Zugangsmultiplexer eines digitalen Teilnehmeranschlusses (DSLAM) ist.

7. Netzwerkvorrichtung, wie beispielsweise ein Switch oder ein Zugangsmultiplexer eines digitalen Teilnehmeranschlusses (DSLAM) für die Verwendung in einem Netzwerk, wobei das besagte Netzwerk eine Client-Vorrichtung und einen IP-Adressen bereitstellenden Host umfasst, wobei die Netzwerkvorrichtung eine Antwort auf eine von dem Host an die Client-Vorrichtung ausgegebene IP-Adresse weiterleitet, wobei die Antwort für die Client-Vorrichtung mindestens eine WAN-seitige IP-Adresse, eine WAN-seitige Teilnetzmaske, eine LAN-seitige IP-Adresse und eine LAN-seitige Teilnetzmaske enthält, wobei die Netzwerkvorrichtung **gekennzeichnet ist durch**
- Snooping-Mittel zum Mitlesen der Antwort des Hosts; und
- einen Speicher zum Speichern der Kombination der WAN-seitigen IP-Adresse, der WAN-seitigen Teilnetzmaske, der LAN-seitigen IP-Adresse und der LAN-seitigen Teilnetzmaske für die Client-Vorrichtung.

## Revendications

1. Procédé pour un dispositif client dans un réseau de données étendu (WAN), comprenant des sous-réseaux locaux (LAN), pour obtenir une adresse de protocole Internet, IP, côté WAN à utiliser dans un port orienté fournisseur du dispositif client et une adresse IP côté LAN à utiliser dans un port orienté client du dispositif client, le procédé comprenant les étapes suivantes :
- délivrer une demande à un hôte fournissant une adresse IP ;
- recevoir une réponse de l'hôte fournissant une adresse IP, dans lequel la réponse comprend au moins ladite adresse IP côté WAN et ladite adresse IP côté LAN, **caractérisé en ce que** la réponse comprend en outre au moins un masque de sous-réseau côté WAN et un masque de sous-réseau côté LAN, **en ce que** le dispositif client comprend un serveur DHCP local pour le LAN,
**et en ce que** le procédé comprend en outre l'attribution d'une plage d'adresses IP représentée par l'adresse IP côté LAN et le masque de sous-réseau côté LAN compris dans la réponse audit serveur DHCP local pour fournir des adresses IP de ladite plage aux dispositifs côté LAN.

2. Procédé selon la revendication 1, dans lequel le dispositif client est une passerelle résidentielle.

3. Procédé selon la revendication 1, dans lequel le dispositif client est un équipement des locaux du client (CPE) de ligne d'abonné numérique (DSL).

4. Procédé selon la revendication 1, dans lequel la demande est conforme au protocole de configuration d'hôte dynamique, DHCP.

5. Procédé pour un dispositif de réseau compris dans un réseau de données, ledit réseau présentant un dispositif client et un hôte fournissant une adresse IP, dans lequel le dispositif de réseau relaie une réponse à une demande d'adresse IP délivrée par l'hôte au dispositif client, dans lequel la réponse comprend pour le dispositif client au moins une adresse IP côté WAN, un masque de sous-réseau côté WAN, une adresse IP côté LAN et un masque de sous-réseau côté LAN, le procédé étant **caractérisé par** les étapes suivantes :
- surveiller la réponse de l'hôte ;
- stocker la combinaison de l'adresse IP côté WAN, du masque de sous-réseau côté WAN, de l'adresse IP côté LAN et du masque de sous-réseau côté LAN pour le dispositif client.

6. Procédé selon la revendication 5, dans lequel le dispositif de réseau est un commutateur ou un multiplexeur d'accès de ligne d'abonné numérique (DSLAM).

7. Dispositif de réseau, tel qu'un commutateur ou un multiplexeur d'accès de ligne d'abonné numérique (DSLAM) à utiliser dans un réseau, ledit réseau comprenant un dispositif client et un hôte fournissant une adresse IP, dans lequel le dispositif de réseau relaie une réponse à une demande d'adresse IP délivrée par l'hôte au dispositif client, dans lequel la réponse comprend pour le dispositif client au moins une adresse IP côté WAN, un masque de sous-réseau côté WAN, une adresse IP côté LAN et un masque de sous-réseau côté LAN, le dispositif de réseau étant **caractérisé par**
- des moyens de surveillance pour surveiller la réponse de l'hôte ; et
- un stockage pour stocker la combinaison de l'adresse IP côté WAN, du masque de sous-réseau côté WAN, de l'adresse IP côté LAN et du masque de sous-réseau côté LAN pour le dispositif client.
